# EUROPEAN PATENT APPLICATION

(11) **EP 4 261 044 A1**
(43) Date of publication of application: **18.10.2023**
(21) Application number: 22160565.2
(22) Date of filing: 07.03.2022
(51) Int. Cl.: B41M 5/00, B41M 7/00, B44C 5/04, C09D 11/322

(54) **METHOD FOR MANUFACTURING A PANEL, A PANEL, A FOIL AND A METHOD FOR MANUFACTURING A FOIL**

(71) Applicant: Flooring Industries Limited, SARL, 8070 Bertrange (LU)
(72) Inventor: CLEMENT, Mr. Benjamin, 8790 Waregem (BE)
(74) Representative: Unilin Technologies

(57) **Abstract**

A method for manufacturing a decorative foil (12), for being used in decorative panels (1), wherein the method at least comprises the following steps:
- the step of providing a thermoplastic foil (13);
- the step of coating at least one side of said foil (13), with an inkjet receiver coating (14);
- the step of forming a decorative pattern (4) by jetting one or more inks on said inkjet receiver coating using an inkjet printer (20), wherein said ink is a water-based pigment containing ink,
- the step of providing an adhesion layer (15) on top of said decorative pattern (4),
wherein said ink comprises a polymeric binder in an amount below 3% weight, preferably below 2% or, more preferably is free from polymeric binders.

## Description

The present invention relates to a method for manufacturing panels having a decorative surface, so-called decorative panels. The invention also relates to a method for manufacturing foil printable with inkjet for use as a decor foil in such panels and to the foil obtainable with such method. According to a variant the obtained decor foil may be used in a laminated assembly other than a panel, such as in room-wide heterogenous vinyl flooring.

More particularly the invention is related to a method for manufacturing panels, especially made of thermoplastic material, wherein said panels at least comprise a substrate material and a provided thereon top layer with a printed motif. The method of the invention could be used for manufacturing panel the top layer of which is formed from thermoplastic material, such as PVC, including at least one thermoplastic decor foil having a printed motif. The panels of the invention may relate to furniture panels, ceiling panels, flooring panels or similar, wherein these panels preferably comprise a substrate. According to the preferred embodiment, the panels comprise a filled synthetic composite material substrate or a mineral based substrate or cement based. These latter panels are also referred to as LVT panels (Luxury Vinyl Tiles), SPC panels (Solid Polymer Composite), WPC (Wood Polymer Composite).

Traditionally, the decor or pattern of such panels is printed on thermoplastic foil by means of offset or rotogravure printing. The obtained foil is taken up as a decor foil in a so-called LVT panel. For manufacturing the panels, preferably at least a lamination of the decor foil and a transparent thermoplastic wear layer is carried out in order to form the top layer of the panel. The mutual connection or adherence of the decor foil and the transparent wear layer is preferably obtained through a thermal lamination process, e.g. by using one or more heated press rollers. The obtained top layer may then be glued or thermally laminated to the substrate. In order to possibly form a relief in the top layer a press treatment or pressing operation may be used. Namely by bringing the thermoplastic top layer in contact with a structured press element, for example a structured press roller. The press element is preferably cooled, while the thermoplastic top layer is presented to the roller in a heated condition, such that the thermoplastic top layer may be cooled down and frozen while in contact with the press element, thereby taking over the negative of the structure of the press element.

The printing of thermoplastic foil by means of an analog printing process, such as by rotogravure or offset printing, at affordable prices inevitably leads to large minimal order quantities of a particular decorative foil and restricts the attainable flexibility. A change of decor or pattern necessitates a standstill of the printing equipment of about 8 hours. This standstill time is needed for exchange of the printing rollers, the cleaning of the printing equipment and for adjusting the colors of the new decor or pattern to be printed.

Instead of analog printing techniques, digital printing techniques, especially inkjet printing techniques, are becoming increasingly popular for the creation of decors or patterns, be it on paper, on foil or directly on a plate-shaped substrate possibly with the intermediary of preparatory layers. Such digital techniques can enhance the flexibility in the printing of decors significantly. Reference is amongst others made to the EP 1 872 959, WO 2011/124503, EP 1 857 511, EP 2 431 190, EP 2 293 946, WO 2014/084787, WO 2015/140682 and the WO 2015/118451, where such techniques are disclosed.

EP 1 044 822, EP 1 749 676 and EP 2 274 485 disclose the use of an inkjet receiver coating to enhance the printing quality on a raw decor paper. Such inkjet receiver coating comprises (water) absorbing particle, especially silica, and a binder, usually a crosslinked polymer such as polyvinyl alcohol (PVA).

For the thermal lamination process to be effective it is important to guarantee good adhesion between the different thermoplastic layers. Such adhesion can be affected by the kind of inks, for example UV ink can have bad adhesion to PVC, and by the presence of liquid, for example water between the layers. WO 2015/140682 proposes to improve the adhesion between the layer by adding an adhesion promoting layer between the thermoplastic layers and by using water-based inks that comprise a polymeric binder.

The present invention aims in the first place at an alternative method for manufacturing panels having a decorative surface or thermoplastic foil, for use in such panels, and seeks, in accordance with several of its preferred embodiments, to solve one or more of the problems arising in the state of the art.

Therefore the present invention, in accordance with its first independent aspect, relates to a method for manufacturing a decorative foil, preferably for being used in decorative panels, wherein the method at least comprises the following steps:
- the step of providing a thermoplastic foil;
- the step of coating at least one side of said foil, with an inkjet receiver coating;
- the step of forming a decorative pattern by jetting one or more inks on said inkjet receiver coating using an inkjet printer, wherein said ink is a water-based pigment containing ink,
- the step of providing an adhesion promoter layer on top of said decorative pattern.

With as a characteristic that said ink comprises a polymeric binder in an amount below 3% weight, for example below 2% or, preferably, is free from polymeric binders. Inventors have found that the by combining an ink receiver layer, and adhesion layer with a binder free water-based ink it is possible to obtain a decorative foil high quality printed pattern without risk of damaging the printer that can be successfully laminated to further layers on top of the decorative pattern like a wear layer.

In the preferred embodiment, the ink can comprise a pigment content in an amount between 0.1 to 20 % weight, preferably 0,1 to 10 weight %, and most preferably 0,3 to 7 weight % based on the total weight of the ink.

The ink can preferably contain a dispersant, more preferably a polymeric dispersant, for dispersing the pigment. Suitable polymeric dispersants are copolymers of two or more monomers.

The ink can further comprise a humectant. The humectant can be selected in the group comprising: triacetin, N-methyl-2-pyrrolidone, 2-pyrrolidone, glycerol, urea, thiourea, ethylene urea, alkyl urea, alkyl thiourea, dialkyl urea and dialkyl thiourea, diols, including ethanediols, propanediols, propanetriols, butanediols, pentanediols, and hexanediols. Preferred humectants are 2-pyrrolidone, glycerol, 1,2-hexanediol and/or a combination thereof. The humectant can be comprised in the ink in an amount between 0.1 to 60 wt%, preferably below 50%, for example between 10 and 50%, based on the total weight of the aqueous inkjet ink. The inventor has found that by increasing the amount of humectant in the ink it is possible to reduce the risk of drying of the ink during and after printing so that damaging of the printhead can be prevented.

In the most preferred embodiment, the inkjet receiver layer can comprise at least a polymeric binder, preferably a thermosetting substance.

The binder can comprise water-based dispersion of terpolymer vinyl chloride, vinyl acetate ethylene; water-based dispersion or copolymer vinyl chloride, vinyl acetate;; other non-blocking water-based acrylics dispersions or a water-based styrene acrylic dispersion polyvinyl alcohol or combinations thereof. In the most preferable embodiment, the binder can be water-based aliphatic PU dispersion. The inventor has found that by selecting water-based aliphatic PU dispersion as binder in the ink receiver layer, the tendency of the décor to yellowing during time can be reduced so that the quality of printed décor can be improved at the time of printing and maintained during time.

According to variants, the inkjet receiver coating includes, a polymer selected from the group consisting of hydroxyethyl cellulose; hydroxypropyl cellulose; hydroxyethylmethyl cellulose; hydroxypropyl methyl cellulose; hydroxybutylmethyl cellulose; methyl cellulose; sodium carboxymethyl cellulose; sodium carboxymethylhydroxethyl cellulose; water soluble ethylhydroxyethyl cellulose; cellulose sulfate; vinylalcohol copolymers; polyvinyl acetate; polyvinyl acetal; polyvinyl pyrrolidone; polyacrylamide; acrylamide/acrylic acid copolymer; polystyrene, styrene copolymers; acrylic or methacrylic polymers; styrene/acrylic copolymers; ethylene-vinylacetate copolymer; vinyl-methyl ether/maleic acid copolymer; poly(2-acrylamido-2-methyl propane sulfonic acid); poly(diethylene triamine-co-adipic acid); polyvinyl pyridine; polyvinyl imidazole; polyethylene imine epichlorohydrin modified; polyethylene imine ethoxylated; ether bond-containing polymers such as polyethylene oxide (PEO), polypropylene oxide (PPO), polyethylene glycol (PEG) and polyvinyl ether (PVE); polyurethane; melamine resins; gelatin; carrageenan; dextran; gum arabic; casein; pectin; albumin; chitins; chitosans; starch; collagen derivatives; collodion and agar-agar. The most preferred variants for the binder are polyvinyl acetates, ethylvinylacetates, block copolymers based on polyvinylacetate, block copolymers based on polyvinylalcohol, acrylates, latexes, polyvinyl derivaties, VCVAC derivatives, polyurethanes based on polyols and isocyanates, polyurethanes based on polycarbamates and polyaldehydes, e.g. both as a water-based dispersion/emulsion or a water-based or solvent solution.

The binder can be comprised in the inkjet receiver coating in an amount between 30 and 98 % weight based on the total weight of the ink receiver coating, for example between 50 and 80% weight.

It is to be noted that, the ink receiver coating can comprise also a crosslinking agent for the crosslinking reaction of the polymeric substance itself. In case of presence of a crosslinking agent this is preferably selected from the group comprising: aldehydes, polyaldehydes, dialdehydes, alcohols, boronic acid, borax, polyalcohols, carbamates, polycarbamates, carbonic acids, glyoxal based agent, zirconium-based agents, titanates and polycarbonic acids.

The inkjet receiver coating can further comprise a dispersant. A dispersant is an oligomer or polymer which stabilize the liquid dispersions of pigment against flocculation. The dispersant can comprise polycarboxylates, polyphosphates, a polyionic polymer, preferably polyDADMAC (Polydiallyldimethylammonium chloride) polyamine or alumina salts.

Preferably, the inkjet receiver coating is provided with less than 10 %, more preferably less than 5% based on dry coating weight of dispersant, for example between 5 and 0.1%.

The inkjet receiver coating can also comprise a flocculant, preferably a metal salt, preferably a cationic metal salt. Preferably said metal salt is chosen from the list consisting of CaCl₂, MgCl₂, CaBr₂, MgBr₂, CMA (Calcium Magnesium Acetate), NH₄Cl, Calcium Acetate, ZrCl₄, calcium nitrate and Magnesium Acetate. The positive ion of the dissolved metal salt will tend to neutralize the electrosteric stabilization function of the pigment. The most preferred cationic metal salts are CaCl₂, MgCl₂, CMA, Calcium Acetate, calcium nitrate and Magnesium Acetate, as the inventors have obtained the best results with these ink reactive compounds. Said flocculant can also be chosen from the list consisting of sodiumaluminate, a double sulphate salt such as alum, polyaluminumchloride, polyacrylate, dicyandiamide (e.g. Floquat DI5 from SNF) and polyacrylamide. The flocculating agent pulls the ink pigments out of the ink dispersion. Thereby the pigments are prevented from penetration to far down into the ink receiver coating. Mainly the vehicle of the ink, e.g. the water in the case of waterbased inks, is absorbed deeper down into the ink receiver coating.

Preferably, inkjet receiver coating is provided with 0,5 to 60 %, based on dry coating weight of flocculating agent, in particular of metal salt.

In a particular embodiment the inkjet receiving coating can be acidic. In particular can comprise one or more acid component. Said acid component can be either organic or inorganic. Preferred examples of acid component are citric acid, formic acid, lactic acid, propionic acid or a combination thereof. Preferably said acid component can show a pH 5, more preferably below 4,5. Said acid component has the function of destabilizing the ink dispersion and is generally used as an alternative to the above mentioned metal salts.

The inkjet receiver coating may also comprise one or more of the following agents:
- Agents altering, more particularly lowering, the pH of said inkjet receiver coating. Preferably the pH of the inkjet receiver coating composition is lowered to pH 5 or lower, by selecting the amount and type of said substance, which selection is within the ambit of the skilled man. Preferably said substance is chosen from the list consisting of formic acid, tartaric acid, acetic acid, hydrochloric acid, citric acid, phosphoric acid, sulfuric acid, AlCl₃ and boronic acid. An adjusted, more particularly lowered pH, preferably to pH 5 or less, increases the chemical affinity of the inkjet receiver coating with the ink and will interfere with the electrosteric stabilization function on the pigment, such that the dispersion of the pigments in the ink will become destabilized quickly.
- Particle surface modifying agents or coupling agents: between 0.05 and 5 g/m², preferably between 0.2 and 2 g/m², e.g. chosen from the non-limiting list consisting of amino silanes, ureido silanes, aldehyde silanes, tetraethylorthosilicate, siliazanes, organically modified silanes, organically modified siliazanes, chlorosilanes, organically modified chlorosilanes, bissilanes, organobissilanes, silsesquioxanes, polysilsesquioxnes, silane oligomers, organically modified silane oligomers, bissilane oligomers, organically modified bissilane oligomers, oligomeric silsesquioxanes, and oligomeric polysilsesquioxanes.
- Additives: wetting agent between 0.005 and 2 g/m², preferably between 0.05 and 1 g/m²; and/or defoaming agent between 0.005 and 2 g/m², preferably between 0.05 and 1 g/m²; and/or fungicide between 0.005 and 2 g/m², preferably between 0.05 and 1 g/m².

In some embodiments the inkjet receiving coating comprises one or more water absorbing substances. Within the context of the present application with water absorbing particle or substance is meant a substance, in particular in form of particle that is able to absorb liquid in particular the vehicle of the ink. Thus, the invention is not limited to water absorbing particle but is meant to encompass liquid absorbing substances. Said water absorbing substance can comprise pigments, in particular minerals, like silicate or aluminum silicates, for example talc, clays, calcined clays, kaolin, silica.

The inkjet receiver coating can comprise an amount of a water absorbing substance up to 50% weight for example between 5 and 40% weight on the entire weight of the inkjet receiver coating.

In some special embodiments, the inkjet receiver coating can comprise an amount of water absorbing substance below 10%wt. In the preferred embodiment, the inkjet receiving layer comprises a water-absorbing particle content below 5%, preferably below 1%, more preferably is free from water-absorbing particles. By reducing the quantity of water absorbing substance the foil becomes more flexible so that it can be rolled again after printing without deteriorating the print and it is also possible to improve embossing of the structure on the top surface panel.

In case the inkjet receiver coating comprises the pigment, it comprises a pigment to binder ratio of 0.85 or more, preferably 1. This preferred amount of pigments in the ink receiving layer provides for a water retention capability which is sufficient for high speed single pass printing, e.g. at 40 meter per minute or more.

Preferably, said foil is provided with 0.2 to 30 g/m², and preferably between 0.5 and 20 g/m², even more preferably between 0.5 and 10 g/m² dry weight of said inkjet receiver coating.

Preferably the thermoplastic foil onto which the inkjet receiver coating is applied has a base weight of 50 to 150 grams per square meter, e.g. between 60 and 100 grams per square meter.

The thermoplastic foil can be of any material, such as polyvinylchloride (PVC) foil, polypropylene (PP) foil, polyethylene (PE) foil, polyethylene-terephthalate (PET) foil or thermoplastic polyurethane (TPU). The preferred thermoplastic material is PVC, and the preferred binder for use on such thermoplastic foils is polyurethane based, acrylate based, or polyvinyl acetate based.

In some embodiment said thermoplastic foil be in form of a rigid sheet, for example can comprise a plasticizer content below 13phr. For example said rigid sheet can show a Vicat softening point above 60°C, more preferably above 70°C, measured according to EN ISO 306 procedure.

According to the most preferred embodiment said inkjet receiver coating is applied in one step in order to form a unique layer having the inkjet receiving coating composition. Anyway, it is not excluded that said inkjet receiver coating is applied in at least two partial steps, wherein respectively a first layer with a first composition and, subsequently, a second layer is applied with a second composition wherein said first and second composition may be either the same or different compositions.

In the preferred embodiment before applying said inkjet receiver coating the surface of the thermoplastic foil is subjected to a treatment that increases the surface energy, for example a corona or plasma treatment. Preferably, the surface energy of the foil before applying the inkjet receiver coating is above 34 mN/m, more preferable more than 38mN/m.

Generally, it is noted that, although the foil obtained with the method of the invention is printable with an inkjet printer, it is not excluded that the foil eventually is printed using other techniques, such as rotogravure or offset printing. Also, in such case, the diminished dust release and the potentially better printing quality is of interest. This is especially the case when aqueous inks are being used.

Preferably, said inkjet receiving coating is a liquid substance which is deposited on said foil. Preferably the liquid substance is a water-based suspension of at least said binder.

The deposition of said liquid substance of the inkjet receiver coating can be obtained in any way, possibly by means of printing, e.g. inkjet printing, but preferably by means of coating techniques, such as roller coating, e.g. by means of one or more gravure rollers, spraying, metering rollers, bead coating, scattering, slot die coating. With the latter techniques, preferably a coating is obtained that covers at least 80% of the surface of the foil. Inline measurement systems may be desirable to steer and control the weight of the inkjet receiver coating. Such technique brings down the risk of obtaining uncoated areas of the foil , which could lead to local flaws in the printed motif. A preferred equipment for application of the liquid substance is a rotogravure or anilox coating device.

The deposition of the liquid substance for the ink receiving coating may be performed in a rotogravure coating line or, preferably, on the printing equipment, immediately before the printing operation. This last case solves any possible issues with limited shelf life of the inkjet receiver coating. Preferably the deposition of the liquid substance is performed while the foil is still in an "endless" shape, namely taken from the roll without cutting. Such techniques allow for a more uniform application of the inkjet receiver coating. In the case the coating is wholly or partially done on the printing equipment, the printing equipment is preferably a roll-to-roll or a roll-to-sheet printer, comprising a coating device upstream of the print heads, for example a gravure coater and/or additional printing heads suitable for printing the liquid substance for the respective sublayer of the inkjet receiver coating. Such additional printing heads, for example an additional row of printing heads, may have nozzles with a larger diameter than those used for the actual printing of the pattern. A resolution of 1 to 100, or even 1 to 25 dots per inch may suffice for these nozzles.

After printing, the ink can be dried to remove water residues thereby improving the thermal lamination on the panel. In the preferred embodiment of the invention, it is possible to perform multiple drying steps to dry one or more inks. For example, in case of printing a set of inks, preferably a set of colored inks, it is possible to perform a drying step dedicated to each color. It may also be possible to perform one drying step after a printing a group of color, for example performing one drying step between printing two groups of colors. More in detail it is possible that after each printing head or printing unit a drying unit is provided, for example a drying NIR (Near Infra-Red) pin, to perform one drying step between the printing units. More in general the printing step can comprise one or more printing operations wherein each of said printing operations is dedicated to print one color and wherein the method comprises one or more ink drying step, wherein said drying step is performed after performing one or more respective printing operations. It is also possible that drying of the ink is performed by blowing hot air on the surface of the printed foil.

Preferably, during printing the foil is kept at a temperature below 90°C, more preferably below 80°C, even more preferably below 70°C. Said printing temperature allows for a better absorption of the ink in the ink receiver coating and prevents the water-based ink from drying too early during printing, for example at the printhead thereby damaging the printheads. To this aim the foil can be printed on a cooled substrate, for example a drum or table. In particular the portion of the foil subjected to ejecting of the ink by the printheads is disposed on said cooled substrate during said jetting of the ink. In this way, even if the above-mentioned drying step of the ink is performed immediately after printing the ink and/or between jetting multiple inks.

Preferably, said foil during printing advances in an advancing direction. In some embodiments said foil advances with a printing speed or advancing speed that can be below 75 m/min. Thanks to said low printing speed it is possible to dry the ink at low temperature leaving more time for drying so that drying of the ink can be effective while at the same time the risk connected to printing at high temperature are avoided.

In order to improve the lamination between the printed foil and the upper wear layer, it is possible to provide an adhesion layer on top of the printed foil. Preferably, the adhesion layer comprises, or is formed by, the same substance forming the binder of the ink receiving layer. Preferably the adhesion layer can comprise water-based dispersion of terpolymer vinyl chloride, vinyl acetate ethylene; water-based dispersion or copolymer vinyl chloride, vinyl acetate; water-based aliphatic PU dispersion; other non-blocking water-based acrylics dispersions or a water-based styrene acrylic dispersion or combinations thereof. Component of the adhesion layer can be self-cross linkable or the adhesion layer can comprise a crosslinker. The adhesion layer can comprise additives like wetting agent, biocide, leveling agent, antifoam, solvent, coloring agent like pigment. Water-based aliphatic PU dispersion forms a preferred choice as yellowing risk is reduced and quality of the print can be maintained during time.

Preferably said adhesion layer is provided in an dry amount between 0,5 and 20 g/sqm.

According to an embodiment of the invention, a second adhesion layer can be provided below the printed foil, i.e between the printed foil and the substrate. This is particularly the case when the substrate is not made of a thermoplastic material or when the substrate is made of a thermoplastic material that is different than that forming the foil. The second adhesion layer can be formed by the same substances forming the first adhesion layer although, according to the specification of the materials, can be formed by different substances.

The wear layer preferably comprises a transparent or translucent sheet made of a thermoplastic material, preferably PVC. The wear layer can comprise hard particles to improve abrasion resistance, for example aluminum oxide particles. The wear layer can comprise a thickness between 100 and 500 µm.

It is noted that in one special embodiment the thermoplastic foil of the first independent aspect can be a thermoplastic transparent layer suitable for being used as wear layer in decorative panels. In this case the décor is printed on the lower surface of said thermoplastic foil, i.e. the surface that during the lamination phase is intended to be directed toward the substrate, being this a panel or an opaque thermoplastic foil. In this special embodiment the ink receiver layer is preferably transparent, for example preferably free of pigment or of absorbing particles and is provided on the lower surface of the thermoplastic foil before printing. The adhesion layer can then be provided above the print in order to enter in contact with the lamination substrate.

It is clear that the present invention also relates to decorative foils that are obtained using the methods of the first aspect of the present invention. With the same aim as in said first aspect, according to a second independent aspect, the invention also relates to decorative foils, wherein said foil at least at one side is provided with an inkjet receiver coating and with a inkjet printed decorative pattern.

Said decorative pattern comprises pigments. Preferably said inkjet receiver coating comprises one or more of the features described for the inkjet receiver coating with reference to the first independent aspect. In particular, in the preferred embodiment of this second aspect, the inkjet receiver coating comprises a binder, preferably a water-based dispersion of terpolymer vinyl chloride, vinyl acetate ethylene; water-based dispersion or copolymer vinyl chloride, vinyl acetate; other non-blocking water-based acrylics dispersions or a waterbased polyurethane dispersion or a water-based styrene acrylic dispersion polyvinyl alcohol or combinations thereof. The inkjet receiver coating of the second aspect can further comprise a dispersant, a flocculant and/ or water base substance.

In some embodiments said decorative foil comprises a inkjet receiver coating in an dry amount between 0,5 g/m2 and 30g/m2.

In the preferred embodiment, the decorative foil comprises an adhesion layer that comprises one or more of the features described for the adhesion layer with reference to the first independent aspect.

It is to be noted that said foil can comprise one or more of the features described above in relation to the first independent aspect.

The invention further, in accordance with its third independent aspect, relates to a method for manufacturing a panel, wherein said panel at least comprises a substrate material and a provided thereon top layer with a printed motif, wherein said top layer is substantially formed from one or more thermoplastic foils, wherein said foils comprise a decor foil on the basis of a foil for inkjet printing in accordance with the second independent aspect and/or obtained by means of a method in accordance with the first independent aspect and/or the preferred embodiments of these aspects.

Preferably, in said third aspect, the foil for inkjet printing is printed by means of an inkjet printer and is attached to said substrate material by means of a hot-pressing treatment. Preferably, said inkjet printer operates on the basis of water-based inks, wherein, more particularly, an inkjet printer of the single-pass type and/or an inkjet printer operated in single-pass mode is preferred.

Clearly, the foil having the inkjet receiving layer of the invention may be used in a method for manufacturing panels having a decorative surface, wherein said panels at least comprise a substrate and a top layer, wherein said top layer comprises a foil having a printed motif, with as a characteristic that for providing said portion of said printed motif use is made of pigment containing inks deposited on said paper layer by means of a digital inkjet printer, and in that said ink is a water based ink, and said ink being free from binder...

Preferably, the printed foil is provided with an adhesion layer as described in relation to the first independent aspect.

As is clear from the above, the method of the third aspect of the invention preferably comprises the step of thermal laminating the printed foil, on top of the substrate.

Preferably a wear layer is applied above the printed motif after printing, e.g. by way of a plastic thermoplastic foil or a liquid coating, preferably while the printed foil is laying on the substrate, either loosely or already connected or adhered thereto.

The method can also comprise a step of embossing the upper surface of the panel, for example by embossing the wear layer and/or the printed foil. The embossing step can be before, after or during thermal lamination of the thermoplastic foils on the substrate. It is also possible that the wear layer is provided with an embossed structure.

The foil of the invention may be a colored, pigmented and/or dyed base foil. The use of a colored and/or dyed base layer enables further limiting the dry weight of deposited ink for attaining a particular pattern or color, so that that flexibility of printed foil is improved. According to an alternative embodiment the ink receiving layer on said foil to be printed is colored or pigmented with colored pigments.

It is further clear that the thermoplastic foil obtained in the first aspect of the invention is suitable for use as a decor foil, in a method for manufacturing floor panels, furniture panels, ceiling panels and/or wall panels.

According to the fourth independent aspect of the invention the printing operation can be performed directly on the panel. Within the scope of the present invention, with "printed directly" it is meant that the printing operation is performed on the support, that in this case act as a printing substrate, instead of being performed on a separate printing substrate, for example a foil. Thus, the expression "printed directly" doesn't exclude that on top of the substrate can be provided one or more layer before printing like, for example, the ink receiving layer. According to a deviant embodiment it is also possible that a blank foil is attached on top of the support and then printed so that the printed motif is printed directly on the support. Therefore, according to its fourth independent aspect, the invention relates to a method for manufacturing a panel comprising the steps of: providing a substrate, preferably made of a thermoplastic material, providing an ink receiving layer on top the substrate, printing a décor directly on top of the substrate, preferably with an inkjet printing. With the characteristic that the ink comprises a binder amount below 3% weight on the whole b, preferably free from absorbing particles. The method according to the fourth independent aspect can comprise one or more feature described in relation to the other independent aspects.

In a preferred embodiment of the fourth independent aspect, the inkjet receiving layer is disposed in direct contact with the surface of the substrate so that the panel is substantially free from the foil.

With the intention of better showing the characteristics according to the invention, in the following, as an example without limitative character, an embodiment is described, with reference to the accompanying drawings, wherein:
Figure 1 shows in perspective a panel according to the invention;
figure 2 shows a view according to the line II-II indicated on figure 1;
figure 3 on a larger scale provide a view on the area F3 illustrated in figure 1;
figure 4 shows some steps in a method for forming the panel of figure 1;
figure 5 shows some steps in an alternative method for forming the panel of figure 1;
figure 6 schematically shows a side view of a printer operated in single-pass mode on a central cylinder.

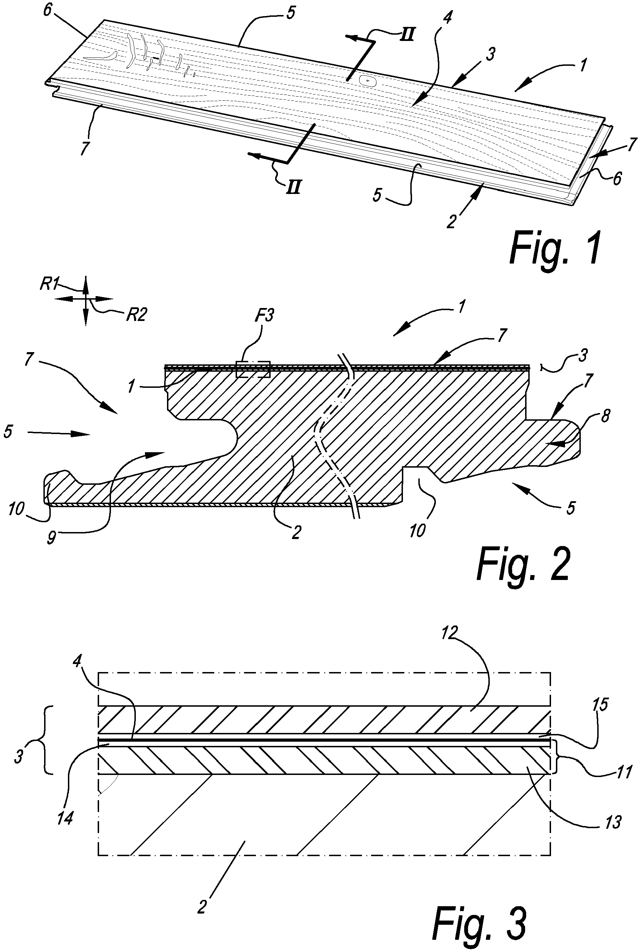

Figure 1 illustrates a decorative panel 1 comprising a substrate 2 made of a thermoplastic material, preferably rigid PVC in the form of the so called SPC and a top layer 3 provided with a printed motif 4, in this case imitating a wood décor. The panel 1 can have the shape of a rectangular and oblong floor panel, with a pair of long sides 5 and a pair of short sides 6. In this case the panel 1 is provided at least at the long sides 5 with coupling means 7 allowing to lock the respective sides 5 together with the sides of a similar panel both in a direction R1 perpendicular to the plane of the coupled panels, as in a direction R2 perpendicular to the coupled sides and in the plane of the coupled panels. As illustrated in figure 2 such coupling means or coupling parts can basically have the shape of a tongue 8 and a groove 9, provided with additional cooperating locking means 10 allowing for said locking in the direction R2.

Figure 2 and figure 3 show that the top layer 3 comprises a decorative foil 11 and a wear layer 12 provided on top of the decorative foil 11. The decorative foil 11 comprises a thermoplastic foil 13 for example made of PVC, and the digitally printed décor 4. The decorative foil 11 further comprises an inkjet receiving layer 14. In the example the inkjet receiving layer comprises a binder, preferably in an amount between 10 and 30g/m². The binder preferably comprises water-based dispersion of terpolymer vinyl chloride, vinyl acetate ethylene; water-based dispersion or copolymer vinyl chloride, vinyl acetate; water-based aliphatic PU dispersion; other non-blocking water-based acrylics dispersions. The inkjet receiving layer further comprise a cross linker, a metal salt and other additives like dispersant, coupling agent, wetting agent or PH modifiers.

In the example, the wear layer 12 is a transparent thermoplastic foil, preferably made of PVC.

Between the decorative foil 11 and the wear layer 12 is provided an adhesion layer 15 comprising water-based dispersion of terpolymer vinyl chloride, vinyl acetate ethylene; water-based dispersion or copolymer vinyl chloride, vinyl acetate; water-based aliphatic PU dispersion; other non-blocking water-based acrylics dispersions, thereby strongly improving lamination between the decorative foil and the wear layer.

The adhesion layer is preferably in an amount between 2 and 20g/m²

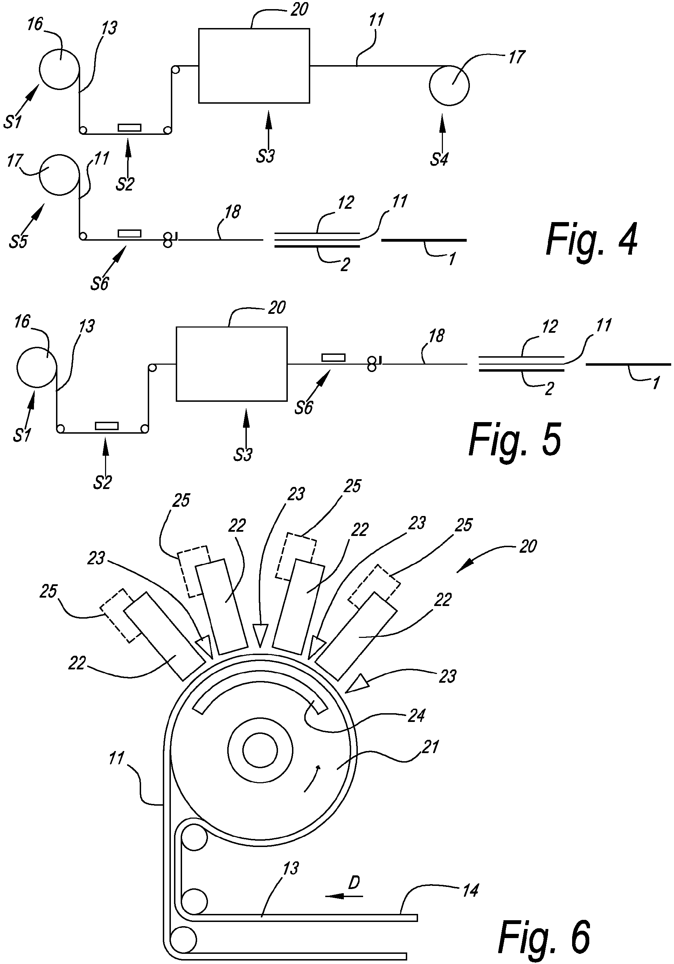

Figure 4 shows some step of a method for manufacturing the panel 1. In the method is illustrated a step S1 of providing the thermoplastic foil 13 by uncoiling it from a first roll 16. The foil 13 is then provided, on at least one surface, with the inkjet receiving layer 14, for example with a doctor blade or a sprayer, in a step S2. In the example, a corona or plasma treatment (not shown) is applied on the surface of the thermoplastic foil 13 before providing the ink receiver coating 14, so that the surface energy of the surface energy of the foil 13 before applying the inkjet receiver coating 14 is above 34 mN/m, more preferable more than 38mN/m.

The coated foil 13 is then printed (step S3) in a single pass printer 20 using water-based ink containing pigments. The ink is free from any polymeric binder and comprises an humectant, in an amount between 10 and 50 % based on the total weight of the ink. In the example selected in the group consisting of: triacetin, N-methyl-2-pyrrolidone, 2-pyrrolidone, glycerol, urea, thiourea, ethylene urea, alkyl urea, alkyl thiourea, dialkyl urea and dialkyl thiourea, diols, including ethanediols, propanediols, propanetriols, butanediols, pentanediols, and hexanediols. The inks used in the invention belong to a set of colored ink comprising at least black, cyan, red and yellow.

After printing, the obtained decorative foil 11 is coiled again in a second roll 17 and then stocked, as indicated in step S4.

For the production of the panel 1, the decorative foil 11 can be uncoiled from second roll 17 in a step S5 and then coated with the adhesion layer 15 in a step S6. The decorative foil 11 can then be cut into sheets 18, in a step S7. The sheets 18 are then sandwiched between a support 2 and a wear layer 12 and then thermally laminated to form the panel 1.

In Figure 5 it is shown an alternative method that differs from that of figure 4 in that after printing step S3 the decorative foil 11 is immediately coated with the adhesion layer 14 and then laminated onto the substrate 2. In this case, the printing line can be in line with a support manufacturing equipment, not show, for example an extruder.

Figure 6 illustrates that the foil 13 having the inkjet receiver coating 14 may be printed by means of an inkjet printer 20, which, in this example comprises a central cylinder 21 upon which the foil 12 is partially wound and several printing units 22, each comprising one or more print heads, disposed radially around the central cylinder 21 and over the area of the foil 13 to be printed. The printer 20, in this example, relates to a printer of the single pass type, wherein the provision of the printed motif involves a relative motion of said inkjet printer 20, more particularly the printing unit 22, and said foil 13 during printing in a printing direction D. In this case, the printing unit 22 and the foil 13, more precisely onto the inkjet receiver coating 14 applied to the foil 13. The foil 13 gets printed during a single continuous movement of the foil 13 itself relative the printer 20.

Preferably each printing unit 22 is configured for printing only one color. Preferably each printing unit 22 extends above the entire width of the foil 13 to be printed. For example, each printing unit is composed by a so called colorbar.

In the embodiment illustrated in the example the printer 20 is provided with a plurality of NIR pins 23 each disposed after a respective printing unit 22 so that each pin 23 immediately dries the ink just printed by the respective printing unit 22. In the example the central cylinder 21 comprises a cooling device 24 to lower the temperature of the foil 13 during printing so that issues cause by printing at high temperatures, like drying of the ink in the nozzles of the printheads can be avoided while at the same time drying of the printed inks can be conducted in an effective way.

In the example each printing unit comprises an ink recirculating circuit 25 configured to recirculate a flow of ink 10 ml/min or more.

It is generally noted that the dimensions of the represented top layer 3 and its components is, in the figures, drawn out of scale in order to better illustrate the invention.

The present invention is in no way limited to the above described embodiments, but such methods, thermoplastic foils and panel may be realized according to several variants without leaving the scope of the invention.

The invention is further disclosed by the following item list as defined by the below numbered items.
1.- A method for manufacturing a decorative foil, preferably for being used in decorative panels, wherein the method at least comprises the following steps:
   - the step of providing a thermoplastic foil;
   - the step of coating at least one side of said foil, with an inkjet receiver coating;
   - the step of forming a decorative pattern by jetting one or more inks on said inkjet receiver coating using an inkjet printer, wherein said ink is a water-based pigment containing ink,

   - the step of providing an adhesion promoter layer on top of said decorative pattern, wherein said ink comprises a polymeric binder in an amount below 3% weight, for example below 2% or, preferably, is free from polymeric binders.
2.- The method according to item 1, wherein the ink comprises a pigment content in an amount between 0.1 to 20 % weight, preferably 0,1 to 10 weight %, and most preferably 0,3 to 7 weight % based on the total weight of the ink.
3.- The method according to item 1 or 2, wherein the ink can preferably contain a dispersant, more preferably a polymeric dispersant, for dispersing the pigment. Suitable polymeric dispersants are copolymers of two or more monomers.
4.- The method according to any of the preceding items, wherein the ink comprises a humectant.
5.- The method according to item 4, wherein the humectant is selected in the group consisting of: triacetin, N-methyl-2-pyrrolidone, 2-pyrrolidone, glycerol, urea, thiourea, ethylene urea, alkyl urea, alkyl thiourea, dialkyl urea and dialkyl thiourea, diols, including ethanediols, propanediols, propanetriols, butanediols, pentanediols, and hexanediols.
6.- The method according to item 4 or 5, wherein the humectant can be comprised in the ink in an amount between 0.1 to 60 wt% based on the total weight of the aqueous inkjet ink.
7.- The method according to any of the preceding items, wherein the inkjet receiver coating can comprise at least a polymeric binder, preferably a thermosetting substance.
8.- The method according to item 7, wherein the binder can comprise water-based dispersion of terpolymer vinyl chloride, vinyl acetate ethylene; water-based dispersion or copolymer vinyl chloride, vinyl acetate; other non-blocking water-based acrylics dispersions or a water-based styrene acrylic dispersion or a waterbased polyurethane dispersion or a polyvinyl alcohol or combinations thereof.
9.- The method according to item 7 or 8, wherein the binder is comprised in the inkjet receiver coating in an amount between 30 and 98 % weight based on the total weight of the ink receiver coating, for example between 50 and 80% weight.
10.- The method according to any of the preceding items wherein, the inkjet receiver coating comprises a dispersant; preferably the dispersant comprising polycarboxylates, polyphosphates, a polyionic polymer, preferably polyDADMAC (Polydiallyldimethylammonium chloride) polyamine or aluminum salts.
11.- The method according to item 10, wherein the inkjet receiver coating comprises less than 5% based on dry coating weight of dispersant, for example between 5 and 0.1%.
12.- The method according to any of the preceding items, wherein the inkjet receiver coating can also comprise a flocculant, preferably a metal salt, preferably a cationic metal salt.
13.- The method according to item 12, wherein said metal salt is chosen from the list consisting of CaCl₂, MgCl₂, CaBr₂, MgBr₂, CMA (Calcium Magnesium Acetate), NH₄Cl, Calcium Acetate, ZrCl₄, calcium nitrate and Magnesium Acetate.
14.- The method according to item 12 or 13, wherein said inkjet receiver coating is provided with 0,5 to 60 %, based on dry coating weight of flocculating agent, in particular of metal salt.
15.- The method according to any of the preceding items, wherein said inkjet receiver can comprise an amount of a water absorbing substance up to 50% weight for example between 5 and 40% weight on the entire weight of the inkjet receiver coating.
16.- The method according to any preceding items, wherein said inkjet receiver coating is provided in a dry weight between 0,5 and 30 g/m².
17.- The method according to any of the preceding items, wherein prior to applying said inkjet receiver coating it is performed a treatment that increases the surface energy, for example a corona or plasma treatment.
18.- The method according to item 17, wherein the surface energy of the foil before applying the inkjet receiver coating is above 34 mN/m, more preferable more than 38mN/m.
19.- The method according to any of the preceding items, wherein the adhesion layer comprises, or is formed by, the same substance forming the binder of the ink receiving layer.
20.- The method according to any of the preceding items, wherein preferably the adhesion layer can comprise water-based dispersion of terpolymer vinyl chloride, vinyl acetate ethylene; water-based dispersion or copolymer vinyl chloride, vinyl acetate; water-based aliphatic PU dispersion; other non-blocking water-based acrylics dispersions or a water-based styrene acrylic dispersion or combinations thereof.
21.- The method according to any of the preceding items, wherein said adhesion layer is provided in an amount between 0,5 and 20 g/sqm dry weight.
22.- The method according to any of the preceding items, wherein said thermoplastic foil be in form of a rigid sheet, for example can comprise a plasticizer content below 13phr.
23.- The method according to any of the preceding items, wherein during said step of printing the sheet is disposed on a cooled support.
24.- The method according to any of the preceding items, wherein said step of printing is performed at a temperature below 90°C, preferably below 80°C.
25.- The method according to any of the preceding items, wherein said step of printing is performed at a temperature above room temperature.
26.- The method according to any of the preceding items, wherein the printing step can comprise one or more printing operations wherein each of said printing operations is dedicated to print one color and wherein the method comprises one or more ink drying step, wherein said drying step is performed after performing one or more respective printing operations.
27.- The method according to any of the preceding items, wherein said printing step comprises printing a plurality of ink belonging to a multicolor ink set comprising at least cyan, yellow, black and red.
28.- A decorative foil obtained through the method according to any of the preceding items.
29.- A decorative foil comprising a thermoplastic foil, an inkjet receiver coating on a surface of said thermoplastic foil, a decorative pattern on said inkjet receiver coating and an adhesion layer on top of said decorative patter, wherein:
   - said inkjet receiver coating and said adhesion layer comprise a binder, said binder being the same; and/or
   - said inkjet receiver coating comprises a binder, wherein the binder can comprise water-based dispersion of terpolymer vinyl chloride, vinyl acetate ethylene; water-based dispersion or copolymer vinyl chloride, vinyl acetate; other non-blocking water-based acrylics dispersions or a water-based styrene acrylic dispersion polyvinyl alcohol or combinations thereof; and/or
   - said inkjet receiver coating is provided in a dry weight between 0,5 and 30 g/m²; and/or
   - said adhesion layer is provided in a dry weight between 0,5 and 20 g/m².
30.- A method for manufacturing a decorative panel wherein said panel comprises a substrate and a top layer, said top layer comprising a decorative foil according to item 27 or 28, and wherein said method comprising the step of attaching said decorative foil on top of said substrate.
31.- The method according to item 30 wherein said decorative foil is glued or thermal laminated on top of said substrate.
32.- The method according to item 30 or 31, wherein said top layer further comprises a wear layer on top of said foil and wherein the method comprises thermal laminating said wear layer on top of said decorative foil.
33.- A panel obtained via the method of any of the items from 30 to 32, preferably a floor, wall, ceiling or furniture panel.

## Claims

1. A method for manufacturing a decorative foil (12), for being used in decorative panels (1), wherein the method at least comprises the following steps:
- the step of providing a thermoplastic foil (13);
- the step of coating at least one side of said foil (13), with an inkjet receiver coating (14);
- the step of forming a decorative pattern (4) by jetting one or more inks on said inkjet receiver coating using an inkjet printer (20), wherein said ink is a water-based pigment containing ink,
- the step of providing an adhesion layer (15) on top of said decorative pattern (4),
**characterized in that** said ink comprises a polymeric binder in an amount below 3% weight, preferably below 2% or, more preferably is free from polymeric binders.

2. The method according to claim 1, **characterized in that** the ink comprises a pigment content in an amount between 0.1 to 20 % weight, preferably 0,1 to 10 weight %, and most preferably 0,3 to 7 weight % based on the total weight of the ink.

3. The method according to any of the preceding claims, characterized int that the ink comprises a humectant.

4. The method according to claim 3, **characterized in that** the humectant is present in the ink in an amount between 0.1 to 60 wt%, preferably between 10 and 50% based on the total weight of the aqueous inkjet ink.

5. The method according to any of the preceding claim, **characterized in that** the inkjet receiver coating (14) comprises at least a polymeric binder, preferably a thermosetting substance.

6. The method according to claim 5, characterized int that the binder of the inkjet receiver coating (14) comprises water-based dispersion of terpolymer vinyl chloride, vinyl acetate ethylene; water-based dispersion or copolymer vinyl chloride, vinyl acetate; other non-blocking water-based acrylics dispersions or a water-based styrene acrylic dispersion or a water-based polyurethane dispersion or a polyvinyl alcohol or combinations thereof.

7. The method according to claim 5 or 6, **characterized in that** the binder of the inkjet receiver coating (14) is comprised in the inkjet receiver coating (14) in an amount between 30 and 98 % weight based on the total weight of the ink receiver coating (14), for example between 50 and 80% weight.

8. The method according to any of the preceding claims, **characterized in that** the inkjet receiver coating (14) comprises a flocculant, preferably a metal salt, for example a cationic metal salt.

9. The method according to claim 8, **characterized in that** said inkjet receiver coating (14) is provided with 0,5 to 60 %, based on dry coating weight of flocculating agent, in particular of metal salt.

10. The method according to any preceding claims, **characterized in that** said inkjet receiver coating (14) is provided in a dry weight between 0,5 and 30 g/m².

11. The method according to any of the preceding claims, **characterized in that** prior to applying said inkjet receiver coating (14) it is performed a treatment that increases the surface energy of the thermoplastic foil (13), for example a corona or plasma treatment, preferably wherein the surface energy of the foil (13) before applying the inkjet receiver coating (14) is above 34 mN/m, more preferable more than 38mN/m.

12. The method according to any of the claims from 5 to 11, **characterized in that** the adhesion layer (15) comprises, or is formed by, the same substance forming the binder of the ink receiving layer.

13. The method according to any of the preceding claims, **characterized in that** said adhesion layer (15) is provided in an amount between 0,5 and 20 g/sqm dry weight.

14. The method according to any of the preceding claims, **characterized in that**:
- during said step of printing the foil (13) is disposed on a cooled support (21); and/or
- said step of printing is performed at a temperature below 90°C, preferably below 80°C; and/or
- said step of printing is performed at a temperature above room temperature.

15. A method for manufacturing a decorative panel (1), preferably a floor, wall, ceiling or furniture panel, wherein said panel (1) comprises a substrate (2) and a top layer (3), said top layer (3) comprising a decorative foil (12) obtained via the method according to any of the preceding claims, and wherein said method comprising the step of attaching said decorative foil (12) on top of said substrate (2), preferably wherein said decorative foil (12) is glued or thermal laminated on top of said substrate (2) and/or preferably wherein said top layer (3) further comprises a wear layer (13) on top of said foil and wherein the method comprises thermal laminating said wear layer (13) on top of said decorative foil (13).
